# EUROPÄISCHE PATENTANMELDUNG

(11) **EP 1 018 303 A1**
(43) Veröffentlichungstag der Anmeldung: **12.07.2000**
(21) Anmeldenummer: 99121220.0
(22) Anmeldetag: 23.10.1999
(51) Int. Cl.: A23K 1/16, B01J 2/16, B01J 20/30

(54) **Wirkstoffe auf Basis von Kieselsäure**

(30) Priorität: 28.12.1998 DE 19860441
(71) Anmelder: Degussa-Hüls Aktiengesellschaft, 60287 Frankfurt am Main (DE)
(72) Erfinder: Barthel, Thomas, 63457 Hanau (DE); Klose, Michael, 60320 Frankfurt/Main (DE); Siray, Mustafa Dr., 53127 Bonn (DE); Nagel, Werner Dr., 63755 Alzenau (DE); Oelmüller, Rolf, 63454 Hanau (DE)

(57) **Zusammenfassung**

Wirkstoffadsorbate auf Basis von Kieselsäuren enthalten Fällungskieselsäure und Wirkstoff, wie zum Beispiel Vitamin E-Acetat. Sie werden durch Granulation einer wäßrigen Suspension von Fällungskieselsäure und Wirkstoff in der Wirbelschicht hergestellt. Die Wirkstoffadsorbate werden zur Supplementierung von Mischfutter eingesetzt.

## Beschreibung

Die Erfindung betrifft Wirkstoffadsorbate auf Basis von Kieselsäure, ein Verfahren zu ihrer Herstellung und ihre Verwendung.

Wirkstoffe, wie zum Beispiel Vitamine, werden als Supplement zum Viehfutter verwendet. Auch Vitamin E (D,L-alpha-Tocopherol) wird in Form des Acetates in den Handel gebracht und als Supplement bei zum Beispiel Viehfutter eingesetzt. D,L-alpha-Tocopherolacetat bzw. Vitamin E-Acetat ist eine hellgelbe, ölige Flüssigkeit, die dem Futtermittel aufgrund seiner Wirksamkeit nur in relativ geringen Mengen, im Vergleich zu der Gesamtfuttermittelmenge, zugesetzt werden braucht. Diese Mengenverhältnisse sind die Ursache dafür, daß das D,L-alpha-Tocopherolacetat nur schwer gleichmäßig in der Futtermittelmenge verteilt werden kann.

Gegenstand der Erfindung sind Wirkstoffadsorbate auf Basis von Kieselsäure, welche dadurch gekennzeichnet sind, daß sie Fällungskieselsäure und Wirkstoff, vorzugsweise Vitamin E-Acetat, enthalten.

In einer Ausführungsform der Erfindung können die Wirkstoffadsorbate 60 Gew.-% Vitamin E-Acetat, bezogen auf das Gesamtadsorbatgewicht, enthalten.

Die erfindungsgemäßen Wirkstoffadsorbate können als Fällungskieselsäure die Fällungskieselsäure Sipernat 22 enthalten.

Die erfindungsgemäßen Wirkstoffadsorbate weisen eine hohe Wirkstoffkonzentration von 1 bis größer 60 Gew.-%, vorzugsweise von 25 bis 60 Gew.-%, auf. Sie sind nahezu staubfrei.

Sie haben eine Stampfdichte von 350 bis 450 g/l und eine Staubzahl von 0,9 bis 4,5.

Die erfindungsgemäßen Wirkstoffadsorbate können mit besonderem Vorteil bei der Herstellung von Mischfutter eingesetzt werden.

Ein weiterer Gegenstand der Erfindung ist ein Verfahren zur Herstellung der Wirkstoffadsorbate, welches dadurch gekennzeichnet ist, daß man einen Fällungskieselsäurefilterkuchen zu einer Suspension mit einem pH-Wert von 1 bis 5 verflüssigt, diese Suspension gemeinsam mit einer oder mehreren Wirkstoffkomponenten, vorzugsweise Vitamin E-Acetat, in eine mit Heißluft erzeugte Wirbelschicht einsprüht oder eindüst, wobei bevorzugt die Wirkstoffkomponente beziehungsweise Wirkstoffkomponenten, wie zum Beispiel Vitamin E-Acetat, der Suspension zugefügt werden, das entstehende, mit der oder den Wirkstoffkomponenten modifizierte Granulat beziehungsweise Wirkstoffadsorbat der gewünschten Korngröße abzieht, gegebenenfalls den Feinanteil abscheidet und in die Wirbeischicht zurückführt, und den pH-Wert des Granulats beziehungsweise des Wirkstoffadsorbats auf einen Bereich von 5,5 bis 8,5, vorzugsweise 6 bis 7,5, einstellt und gegebenenfalls zur Einstellung einer vorgegebenen mittleren Korngröße siebt.

### Beispiele

Eine wäßrige Suspension der Fällungskieselsäure VN3 mit einem Feststoffgehalt von 20 Gew.-% und einem pH-Wert von 4 wird vorgelegt.

In diese Suspension wird Vitamin E-Acetat gravimetrisch zudosiert und mit einem schnell laufenden Propellerrührer dispergiert. Danach wird mit einem Ultra-Turrax homogenisiert.

Die Dispersion wird mittels einer Zweistoffdüse bei einem Stickstoffdruck von 1,5 barü in den Labor-Wirbelschichttrockner eingedüst.

Dabei werden die folgenden Bedingungen eingehalten:

**Tabelle 1**

| Sipernat 22/Vitamin E | | Einstellung 1 | Einstellung 2 | Einstellung 3 |
|---|---|---|---|---|
| Keimvorlage | g | keine | keine | keine |
| Zuluftmenge | Nm³/h | 35 - 40 | 40 - 65 | 50 - 80 |
| Zulufttemperatur | °C | 200 | 200 | 200 |
| Düsendruck | bar | 1,5 | 1,5 | 1,5 |
| Suspensionsmenge | kg/h | 3 - 9 | 4 - 8 | 5 - 8 |
| Wirbelschichttemperatur | °C | 43 - 48 | 43 - 46 | 47 - 50 |
| Vitamin E-Gehalt | Gew.-% | 25 | 50 | 60 |

Vorteil des erfindungsgemäßen Verfahrens wäre zum einen der gegenüber jetzigen Verfahren mögliche höhere Wirkstoffanteil (60 % Vitamin E gegenüber 50 % bei den bekannten Mischverfahren) sowie die staubarme, granuläre Produktform ohne weiteren Verfahrensschritt (wie zum Beispiel Tablettieren oder Kompaktieren).

Ebenfalls positiver Aspekt des erfindungsgemäßen Herstellverfahrens ist es, daß mit der Granulation in der Wirbelschicht bei derart hohen Anteilen an Vitamin E bereits bei der Granulation die Endproduktfeuchte erreicht wird. Das bedeutet, daß ein separater Nachtrocknungsschritt entfallen kann.

In Tabelle 2 sind die anwendungstechnischen Untersuchungsergebnisse dargestellt.

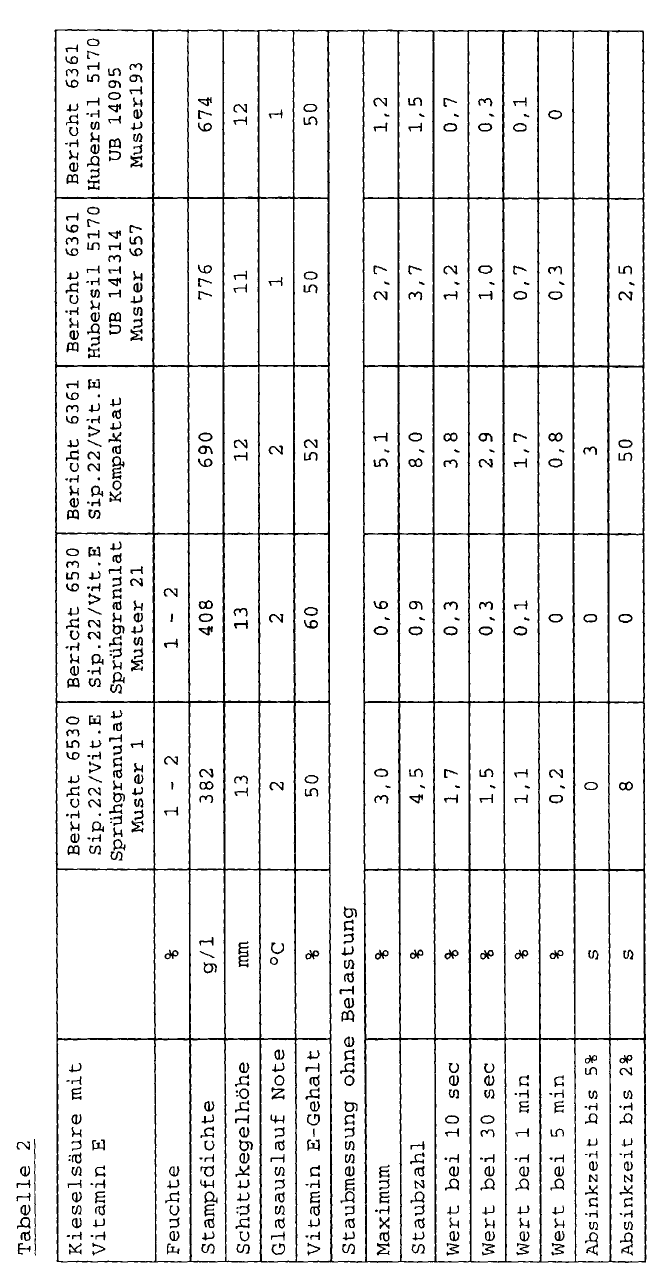

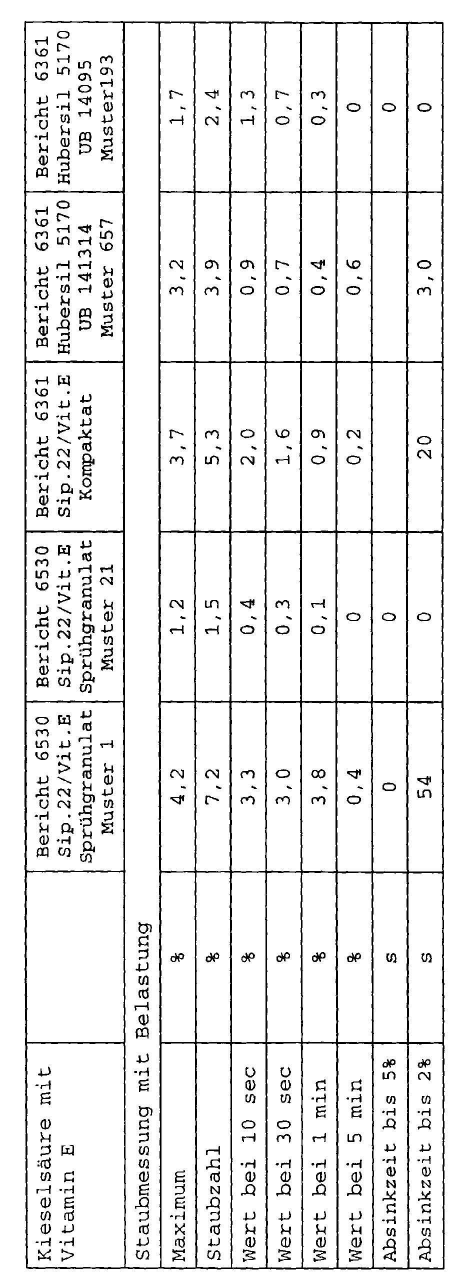

Der Vergleich mit anderen Wirkstoffadsorbaten in der anwendungstechnischen Prüfung ergibt für die Sprühgranulations-Musterprodukte trotz des höheren Wirkstoffgehaltes von 60 % Vitamin E niedrigere Stampfdichten. Wie in Tabelle 2 aber auch zu erkennen ist, tritt bei hoher Vitamin E-Konzentration ein besseres Staubverhalten auf. Das erfindungsgemäße Adsorbat ist ein staubarmes, hochkonzentriertes Sipernat 22/Vitamin E-Granulat mit guten Dispergier- und Fließeigenschaften.

## Patentansprüche

1. Wirkstoffadsorbate auf Basis von Kieselsäure, dadurch gekennzeichnet, daß sie Fällungskieselsäure und Wirkstoff enthalten.

2. Wirkstoffadsorbate nach Anspruch 1, dadurch gekennzeichnet, daß sie Wirkstoff von 1 bis über 60 Gew.-%, vorzugsweise 25 bis 60 Gew.-%, bezogen auf das Gesamtadsorbatgewicht, enthalten.

3. Wirkstoffadsorbate nach Anspruch 1, dadurch gekennzeichnet, daß sie als Fällungskieselsäure die Fällungskieselsäure Sipernat 22 enthalten.

4. Wirkstoffadsorbate gemäß den Ansprüchen 1 bis 3, dadurch gekennzeichnet, daß sie als Wirkstoff Vitamin E-Acetat enthalten.

5. Verfahren zur Herstellung der Wirkstoffadsorbate nach den Ansprüchen 1 bis 3, dadurch gekennzeichnet, daß man einen Fällungskieselsäurefilterkuchen zu einer Suspension mit einem pH-Wert von 1 bis 5 verflüssigt, diese Suspension gemeinsam mit einer oder mehreren Wirkstoffkomponenten, vorzugsweise Vitamin E-Acetat, in eine mit Heißluft erzeugte Wirbelschicht einsprüht oder eindüst, wobei bevorzugt die Wirkstoffkomponente bzw. Wirkstoffkomponenten der Suspension zugefügt werden, das entstehende, mit der oder den Wirkstoffkomponenten modifizierte Granulat der gewünschten Korngröße abzieht, gegenbenenfalls die Feinanteile abscheidet, und den pH-Wert der Granulate bzw. des Adsorbats auf einen Bereich von 5,5 bis 8,5, vorzugsweise 6 bis 7,5, einstellt und gegebenenfalls zur Einstellung einer vorgegebenen mittleren Korngröße siebt.

6. Verwendung des Wirkstoffadsorbats nach Anspruch 1 zur Supplementierung von Mischfutter.
